# EUROPEAN PATENT APPLICATION

(11) **EP 4 137 588 A1**
(43) Date of publication of application: **22.02.2023**
(21) Application number: 22182079.8
(22) Date of filing: 30.06.2022
(51) Int. Cl.: C14B 7/04

(54) **METHOD OF MAKING A LEATHER FABRIC AND LEATHER FABRIC**

(30) Priority: 30.06.2021 IT 202100017150
(71) Applicant: Fanini, Filippo, 06089 Torgiano (PG) (IT)
(72) Inventor: Fanini, Filippo, 06089 Torgiano (PG) (IT)
(74) Representative: Ercolani, Simone Pietro

(57) **Abstract**

Method of making a leather fabric (1), comprising the steps of:
a) applying an adhesive material (11) on the lower face (12b) of each leather piece (2) of a plurality of leather pieces, said lower face (12b) of each leather piece (2) being opposite a respective upper face (12a);
b) positioning said leather pieces (2) on a support (30) with the upper face (12a) of said leather pieces (2) facing the opposite side of said support (30) and such as each piece (2), at least in part, overlaps, or is overlapped by one or more adjacent pieces (2) at a respective edge (2a), thus forming one or more overlapping areas (40);
c) mutually pressing said support (30) and said leather pieces (2) at the end of said step b), such as to create a leather fabric (1).

## Description

### FIELD OF THE INVENTION

The present invention concerns a method of making a leather fabric and respective leather fabric. In particular, the present invention concerns a method of reusing scraps generated from the processing of leathers for creating a genuine leather fabric.

### STATE OF THE ART

Methods that allow to use scraps generated from the processing of leathers are known.

For example, the document CN110918424 describes a recycled leather sheet structure comprising a base material, an adhesive and a plurality of recycled leather particles. The adhesive covers the surface of the base material; the leather particles are fixed on the surface of the base material through the adhesive. The recycled leather particles are prepared by cutting off and milling hide scraps or leather scraps; and the recovered leather scraps can be dyed in leather particles of different colors. The base material comprises a polyurethane sheet (PU). The adhesive (2) is applied on such soft substrate, then the recovered leather particles are electrostatically flocked to absorb and evenly distribute the adhesive on the surface of the soft substrate. The adhesive is then polymerized and a recycled leather sheet structure, which is visually similar to suede, is formed.

The document CN1193050 describes a method of producing genuine leather by using leather scraps that are initially pulverized before adding the glue. The final material is then evenly mixed, therefore, the product thus made is press-formed. The product described in CN'050 can be used for making shoe soles. Its surface can be sprayed to change its color and gloss. In any case, such final product can be used to make any other leather product.

However, such solutions are not devoid of drawbacks. In fact, they provide for the step of pulverizing the scraps from the processing of leathers before gluing them on a support. In reality, in addition to being rather complex, such process does not allow to make a genuine leather fabric, and the final aspect of the fabric is much different than what the end-client would expect from a genuine leather fabric both to the sight and touch.

Moreover, further solutions, wherein the step of sewing the recycled leathers on the support on which they are positioned, are known. Also in this case, the method does not allow to obtain a fabric that is really similar to leather but rather one that is extremely rough and, thus, not very appealing to clients.

US1516571, in the name of Moore Frederick, concerns a solution related to a process of making coating materials by joining fabrics by means of a plastic coating body, a leather surface, a single piece or a number of pieces or layers overlapping one another.

DE19811231, in the name of Schneider Frank Bernd, describes a decorative material which comprises numerous planar leather pieces glued together such as to form a layer of even thickness.

EP3642025, in the name of Ecco Sko As, describes a method of making a leather laminate having a structured surface and leather laminates made with such method. The laminates comprise a layer of leather bonded to a reinforcing fabric with an adhesive, the reinforcing fabric confers resistance to the laminate. The method provides for the dry milling of the laminate in damp air, during which the reinforcing fabric constrains the laminate, thus causing the formation of the structured surface.

The solution described in EP3415644, in the name of Autec of Geri Ing. Fabrizio & C sas, concerns the technical sector of equipment for processing leather so that it, after having left the tannery, is used for producing various items such as leather goods, footwear, accessories, clothing items and the like.

Object of the present invention is to implement a method that solves the problems of the known art, i.e. that allows the perfect recycling of the scraps generated from the processing of leathers and which anyhow allows to make a leather fabric that is as similar as possible to a whole sheet of leather fabric both to the sight and touch.

Further object of the present invention is to implement a simple and eco-friendly method.

Finally, object of the present invention is to make a leather fabric that, starting from small recycled leather pieces, is as similar, both the sight and touch, to the normal leather fabrics currently marketed.

### SUMMARY OF THE INVENTION

These and further objects are achieved by means of a method of making a leather fabric, comprising the steps of:
a) applying an adhesive material on the lower face of each leather piece of a plurality of leather pieces, said lower face of each leather piece being opposite a respective upper face;
b) positioning said leather pieces on a support with the upper face of said leather pieces facing the opposite side of said support and such as each piece, at least in part, overlaps, or is overlapped by one or more adjacent pieces at a respective edge, thus forming one or more overlapping areas;
c) mutually pressing said support and said leather pieces at the end of said step b), such as to create a leather fabric.

The process described above allows to obtain a fabric that uses portions of recycled leather, that is thus eco-friendly and similar to a genuine leather fabric both to the sight and touch. In fact, the lower support is completely covered with the leather pieces since such pieces must overlap, or are overlapped by the adjacent ones at least along an edge. Moreover, such process is rather simple to implement and does not require sewing any of the various leather pieces, thanks to the fact that the pieces fully cover the support of the fabric.

It should be observed that the upper face of each piece is also known as leather grain, i.e. the most noble and resistant part of leather and also the one that is visible to all on the outside. The lower face is instead also known as split leather.

Always according to the method, said step a) is preceded by the step d) of arranging a plurality of leather scrap pieces on a tray, or on a conveyor belt, with the upper face of each leather scrap piece facing the upper surface of said tray, or of said conveyor belt, wherein said step a) comprises the step a1) of applying said adhesive material on the lower face of each leather piece of said plurality of leather scrap pieces, wherein said lower face of each leather piece is opposite the respective upper face, and the step a2) of cutting to size said leather scrap pieces for obtaining said plurality of leather pieces.

Also in this case, the upper face of each leather scrap piece is also known as leather grain, i.e. the most noble and resistant part of leather and also the one that is visible to all on the outside. The lower face of each scrap piece is instead also known as split leather.

In practice, the adhesive material can be applied either directly to the small leather pieces or to leather scrap pieces from which it is then possible to obtain the small leather pieces after cutting. Such small leather pieces obtained from cutting leather scrap pieces will have adhesive material, previously applied on the lower face of the leather scrap pieces, on their lower face.

Moreover, the method comprises the step e) of grinding, preferably at said overlapping areas, the outer surface of said leather fabric obtained at the end of said step c) on the side of the fabric opposite that of said support, at the upper face of said leather pieces positioned on said support during said step b), such as the upper faces of two or more contiguous leather pieces are substantially devoid of discontinuities, i.e. are devoid of step-shaped surfaces or the like. Thanks to such step, the unevenness created by overlapping the small leather pieces that are to be overlapped are eliminated. Such operation thus allows to confer a perfect finish to the leather fabric. In fact, the surface will no longer be step-shaped, due to the effect of the thickness of the leather pieces that are overlapping one another, but will be perfectly smooth like genuine leather fabrics are, i.e. those obtained from a single piece of leather.

According to an embodiment of the invention, the method comprises the step f) of applying a layer of scratch-resistant material on said outer surface of said leather fabric at the end of said step c), or of said step e).

According to a particular aspect of the solution suggested, during said step d), said leather pieces are positioned on a tray, or on a conveyor belt, which has a plurality of through holes.

In particular, said step a2) comprises the step of operating through a laser cutting machine, wherein, during said step a2), the step a2') of applying an air suction flow on the lower surface of said tray having a plurality of through holes, or of the conveyor belt, is comprised, such as to restrain said leather pieces, or said small leather pieces, on the upper surface of said tray, or of said conveyor belt.

Such operation allows to restrain all the scrap pieces, or leather pieces, on the upper surface of the tray on which they were positioned, such as the laser cutting device can perform the cutting in a precise and accurate way, without risking that some leather pieces, or small leather pieces, can move during such operation.

Moreover, said step a2) further comprises the step a21) of analyzing the arrangement of said leather scrap pieces arranged on said tray, or on said conveyor belt, and the step a22) of determining the type of cut and/or cut sizes to be made depending on such analysis carried out during said step a21).

Still, said step b) comprises the step b1) of displacing a robotic arm of a robotized unit at said tray, or conveyor belt, the step b2) of grasping, one by one, said leather pieces of said plurality of leather pieces from said tray, or from said conveyor belt, and the step b3) of releasing each leather piece on said support.

Always according to the embodiment described herein, said step a), or a1), comprises the step of applying a gluing sliver which can be activated upon reaching a given temperature, or the step of spraying a glue.

Moreover, said step c) comprises the step c1) of thermally activating said gluing sliver applied during said step a), or a1), such as to create a leather fabric.

Still, said step a), or said step d), is preceded by the step d0) of screening said plurality of leather pieces, or said plurality of leather scrap pieces, depending on the thickness and/or color and/or dimensions and/or shape, and/or is preceded by the step d0') of cleaning said plurality of said leather pieces, or said plurality of said leather scrap pieces.

The objects of the present invention are also achieved by means of a leather fabric comprising at least one lower support fabric and a plurality of leather pieces glued on said support, wherein said leather pieces of said plurality of leather pieces are positioned on said support such as each piece, at least in part, overlaps, or is overlapped by one or more adjacent pieces at a respective edge.

Finally, the outer surface of said leather fabric, on the side of the fabric opposite that of said support, at the area obtained by the overlapping of two edges of at least two contiguous small leather pieces, i.e. at said one or more overlapping areas, is devoid of discontinuities.

In practice, by touching the outer surface of the fabric, the user will not be able to feel the "change" of surface between two or more upper faces of two or more contiguous leather pieces by touch. This is achieved through the process of grinding the outer surface of the leather fabric.

### DESCRIPTION OF THE FIGURES

These and further aspects of the present invention will become clearer in the following detailed description of a preferred embodiment provided herein by way of example only and without limitations, with reference to the accompanying figures, in which:

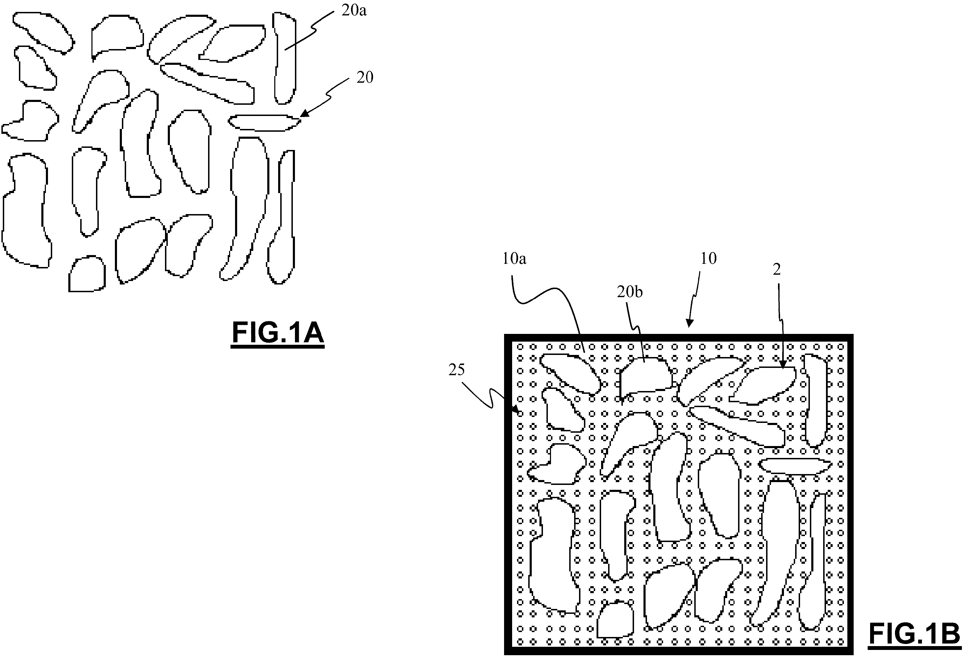

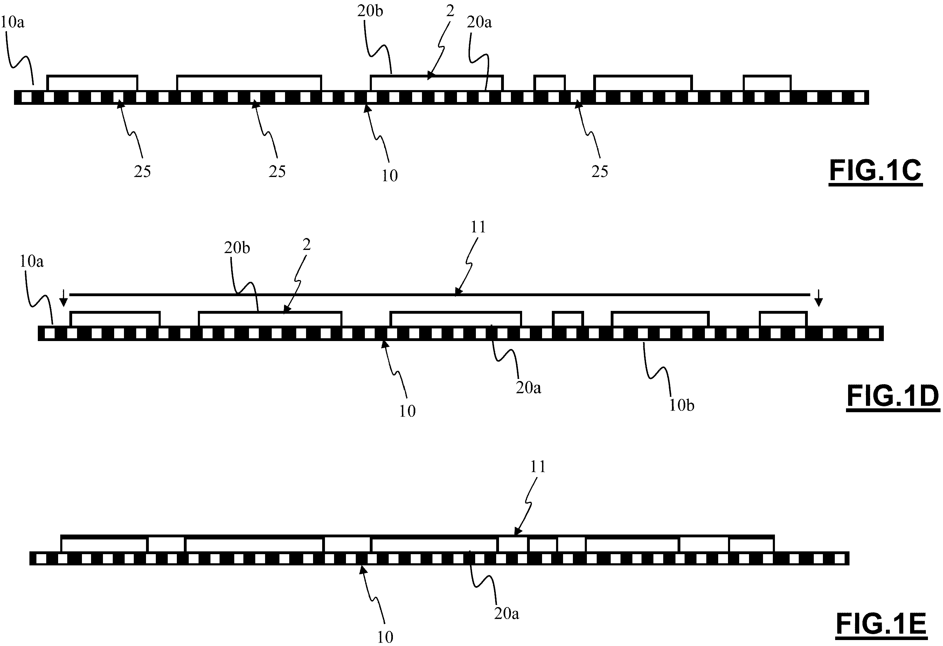

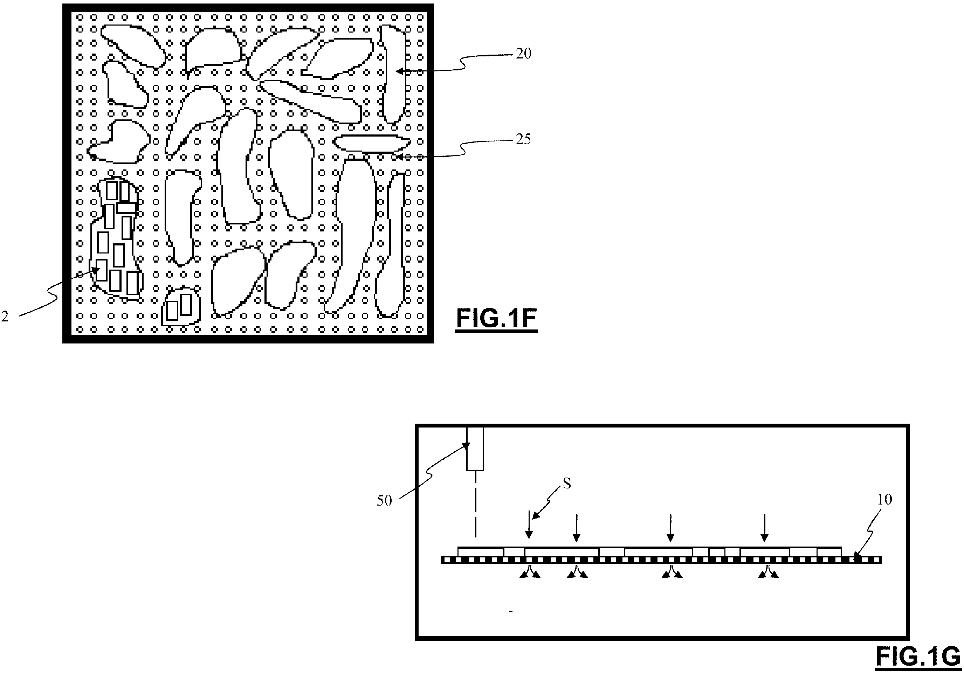

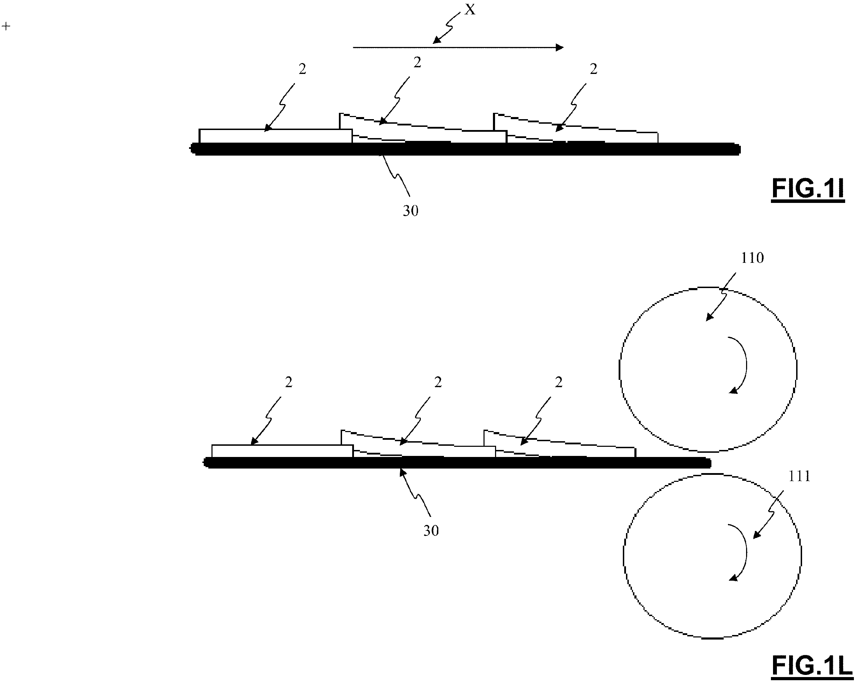

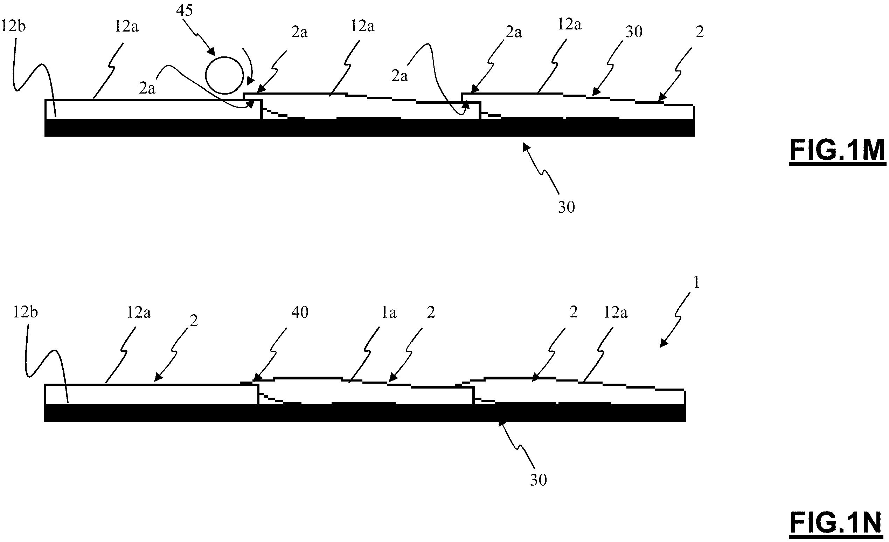

figures 1A to IN show different steps of the method according to the invention.

### DETAILED DESCRIPTION OF A PREFERRED EMBODIMENT OF THE PRESENT INVENTION

A leather fabric 1 according to the invention is shown in figures 1M and IN.

Such leather fabric 1 comprises a lower support fabric 30, made for example in microfiber (or also in recycled cotton or sliver), and a plurality of leather pieces 2 cut to size and glued on the support 30. Such leather pieces 2 are positioned on the support 30 such as each leather piece 2, at least in part, overlaps, or is overlapped by one or more adjacent pieces 2 at a respective edge 2a.

In particular, as shown in figure IN, the outer surface 1a of the leather fabric 1, which is on the side of the fabric 1 opposite that of the support 30, at the area 40 obtained by the overlapping of two edges 2a of at least two leather pieces 2, is devoid of discontinuities. In practice, the overlapped edges 2a of two leather pieces 2 are at an overlapping, or connecting, area 40 such as the upper faces 12a of the contiguous leather pieces 2 are substantially devoid of discontinuities, i.e. are devoid of steps or protruding elements, such as the two upper faces 12a of two contiguous leather pieces 2 seem to be in one piece to the touch.

The method of making a leather fabric 1 of the type described above comprises the steps of:
a) applying an adhesive material 11 on the lower face 12b of each leather piece 2 of a plurality of leather pieces, wherein the lower upper face 12a of each leather piece 2 is opposite the respective lower face 12b;
b) positioning the leather pieces 2 on a support 30 with the upper face 12a of the leather pieces 2 facing the opposite side of the support 30 and such as each piece 2, at least in part, overlaps, or is overlapped by one or more adjacent pieces 2 at a respective edge 2a, thus forming one or more overlapping areas 40;
c) mutually pressing the support 30 and the leather pieces 2 at the end of the step b), such as to create a leather fabric 1.

It should be observed that the upper face 12a of each piece 2 is also known as leather grain, i.e. the most noble and resistant part of leather and also the one that is visible to all on the outside. The lower face 12b is instead also known as split leather.

In particular, according to the peculiar embodiment described herein, the step a) is preceded by the step d) of arranging a plurality of leather scrap pieces 20 previously recovered from scraps generated from the processing of leather (see figure 1A), on a tray 10 (see figure 1B), with the upper face 20a of each leather scrap piece 20 facing the upper surface 10a of the tray 10. Also in this case, the upper face 20a of the scrap pieces 20 is the leather grain. Advantageously, the step a) comprises the step a1) of applying adhesive material 11 on the lower face 20b (or split leather) of each leather scrap piece 20 of the plurality of leather scrap pieces (see figures 1D and IE), wherein the lower face 20b is opposite the upper face 20a, and the step a2) of cutting to size said leather scrap pieces 20 to obtain the aforementioned leather pieces 2. In practice, according to such peculiar embodiment, the application of the adhesive material 11 to the lower face 12b of the leather pieces 2 occurs following the application of adhesive material 11 on the leather scrap pieces 20, during step a1), and the cutting to size of such scrap pieces 20 such as to form the leather pieces 2 which are thus provided with such adhesive material 11.

According to a particular aspect of the invention, the step d) is preceded by the step d0) of screening said leather scrap pieces 20 depending on the thickness and/or color and/or dimensions and/or shape. Preferably, the step d) is further preceded by the step d0') of cleaning the leather scrap pieces 20.

The method further comprises the step e) of grinding, by means of a device such as, for example, a grinding wheel 45, preferably at said overlapping areas 40, the outer surface 1a of the leather fabric 1 obtained at the end of the step c) on the side of the fabric 1 opposite that of the support 30, at the upper face 12a of the leather pieces 2 positioned on the support 30 during the step b), such as the overlapping areas 40 between two or more contiguous leather pieces 2 are continuous, i.e. such as the upper faces 12a of two or more contiguous leather pieces 20 are substantially devoid of discontinuities.

Such operation allows to eliminate the "steps" that are created by overlapping the pieces 2 cut to size and overlapping each other. In fact, at each overlap of two pieces 2 cut to size, the portion of the piece 2 overlapping the adjacent one, also denoted as the overlapping area 40, forms a sort of step (also see figure 1M) equal to the thickness of the leather piece 2 which, to the touch, would generate a certain annoying feeling for the buyer who is instead used to a perfectly smooth leather fabric, or anyhow devoid of "steps". Thus, this operation allows to make the outer surface 11a of the leather fabric 1, constituted by a plurality of leather pieces 2 cut to size and overlapping each other, identical to the touch as that of the outer surface of a fabric made of a single piece of leather.

Still, the method comprises the step f) of applying a layer of scratch-resistant material on the outer surface 1a of the leather fabric 1 at the end of the step c), or of the step e).

Finally, such operation allows to increase the resistance characteristics of the surface of the leather fabric 1.

Moreover, during the step d), said leather pieces 20 are positioned on a tray 10, or on a conveyor belt, which has a plurality of through holes 25.

In particular, the step a2) comprises the step of operating through a laser cutting device 50, wherein, during said step a2), the step a2') of applying an air suction flow S on the lower surface 10b of the tray 10 having a plurality of through holes 25 is comprised, such as to restrain the leather pieces 2 of said plurality of leather pieces on the upper surface 10a of the tray 10.

Preferably, the step a2) further comprises the step a21) of analyzing the arrangement of the leather scrap pieces 20 arranged on the tray 10 and the step a22) of determining the type of cut and/or cut sizes to be made depending on such analysis carried out during the step a21). In particular, in this case, only few leather scrap pieces 20 subjected to laser cutting for being transformed into leather pieces 2 cut to size in rectangular shape were shown in figure IF for simplicity. It should however be said that the cutting shape and the sizes can be selected by the user without any limitation. It should also be specified that the step a21) can further be obtained by using a camera that can shoot the leather scrap pieces 20 at a given moment and allows, starting from such image, the following step a22) to be carried out.

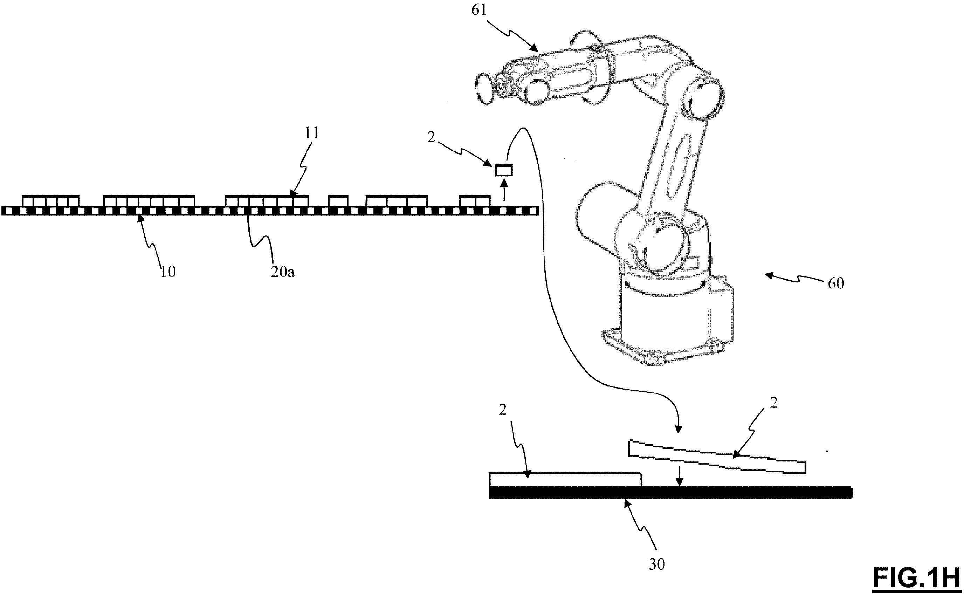

Moreover, the step b) comprises the step b1) of displacing a robotic arm 61 of a robotized unit 60 at the tray 10, the step b2) of grasping, one by one, the leather pieces 2 from the tray 10 and the step b3) of displacing (i.e. releasing) each leather piece 2 cut to size on the support 30, such as the leather pieces 2 cut to size are overlapping each other at least along a respective edge 2a (see figure 1H and 1I).

Thus, in practice, the various leather pieces 2 cut to size are arranged such as at least one hem of each piece, at the edge 2a, sized of about 1 cm, is overlapping the hem of the contiguous leather piece 2.

According to a particular embodiment described herein, once a direction X in space has been determined, the step b) further comprises the step b1) of arranging all the leather pieces 2 cut to size such as the piece subsequently displaced, with respect to the previous one, has an edge 2a overlapping that 2a of the preceding leather piece 2. This way, along the direction X selected, there will be a series of leather pieces 2 cut to size in which the edge 2a of the piece previously positioned is overlapping the edge 2a of the piece 2 positioned successively. In case of rectangular-shaped leather fabric 1, two mutually orthogonal directions in space, according to which an identical arrangement of the pieces 2 can be made along the two directions in space, will thus have to be selected.

Always according to the invention, the step a), or the step a1), comprises the step of applying a gluing sliver which can be activated upon reaching a given temperature. Alternatively, the step a), or the step a1), can comprise the step of spraying a glue, preferably water-based.

Moreover, the step c) comprises the step c1) of thermally activating the gluing sliver applied during the step a), or the step a1), such as to create the leather fabric 1.

The step can occur during the step c), for example obtained by heating a roller 110 of two counter-rotating rollers 110, 111 between which the leather fabric 1 obtained during the step b) passes. The heating of the roller promotes the activation of the gluing sliver and, thus, the gluing of the pieces 20 to the support 30.

The support 30 can consist of a sheet of material or a strip of material that is unwound from an initial bobbin and that, once the aforementioned two rollers 110 and 111 have been crossed, and thus once the fabric 1 has been completely formed and appropriately pressed, can be rewound in a second bobbin.

## Claims

1. Method of making a leather fabric (1), comprising the steps of:
a) applying an adhesive material (11) on the lower face (12b) of each leather piece (2) of a plurality of leather pieces, said lower face (12b) of each leather piece (2) being opposite a respective upper face (12a);
b) positioning said leather pieces (2) on a support (30) with the upper face (12a) of said leather pieces (2) facing the opposite side of said support (30) and such as each piece (2), at least in part, overlaps, or is overlapped by one or more adjacent pieces (2) at a respective edge (2a), thus forming one or more overlapping areas (40);
c) mutually pressing said support (30) and said leather pieces (2) at the end of said step b), such as to create a leather fabric (1).

2. Method according to claim 1, **characterized in that** said step a) is preceded by the step d) of arranging a plurality of leather scrap pieces (20) on a tray (10), or on a conveyor belt, with the upper face (20a) of each leather scrap piece (20) facing the upper surface (10a) of said tray (10), or of said conveyor belt, wherein said step a) comprises the step a1) of applying said adhesive material (11) on the lower face (20b) of each leather piece (20) of said plurality of leather scrap pieces (20), wherein said lower face (20b) is opposite said upper face (20a), and the step a2) of cutting to size said leather scrap pieces (20) for obtaining said plurality of leather pieces (2).

3. Method according to claim 1 or 2, **characterized by** further comprising the step e) of grinding, preferably at said overlapping areas (40), the outer surface (1a) of said leather fabric (1) obtained at the end of said step c) on the side of the fabric opposite that of said support (30), at the upper face (12a) of said leather pieces (2) positioned on said support (30) during said step b), such as the upper faces (12a) of two or more contiguous leather pieces (20) are substantially devoid of discontinuities.

4. Method according to one or more of claims 1 to 3, **characterized by** comprising the step f) of applying a layer of scratch-resistant material on said outer surface (1a) of said leather fabric (1) at the end of said step c), or of said step e).

5. Method according to one or more of the preceding claims, **characterized in that**, during said step d), said leather pieces (20) are positioned on a tray (10), or on a conveyor belt, which has a plurality of through holes (25).

6. Method according to claim 2 or to one or more of claims 3 to 5 whenever dependent on claim 2, **characterized in that** said step a2) comprises the step of operating through a laser cutting machine (50), wherein, during said step a2), the step a2') of applying an air suction flow on the lower surface (10b) of said tray (10) having a plurality of through holes (25), or of the conveyor belt, is comprised, such as to restrain said leather scrap pieces (20), or said leather pieces (2), on the upper surface (10a) of said tray (10), or of said conveyor belt.

7. Method according to claim 2 or to one or more of claims 3 to 6 whenever dependent on claim 2, **characterized in that** said step a2) further comprises the step a21) of analyzing the arrangement of said leather scrap pieces (20) arranged on said tray, or on said conveyor belt, and the step a22) of determining the type of cut and/or cut sizes to be made depending on such analysis carried out during said step a21).

8. Method according to one or more of claims 1 to 7, **characterized in that** said step b) comprises the step b1) of displacing a robotic arm (61) of a robotized unit (60) at said tray (10), or conveyor belt, the step b2) of grasping, one by one, said leather pieces (2) of said plurality of leather pieces from said tray (10), or from said conveyor belt, and the step b3) of releasing each leather piece on said support (30).

9. Method according to one or more of claims 1 to 8, **characterized in that** said step a), or a1), comprises the step of applying a gluing sliver which can be activated upon reaching a given temperature, or the step of spraying a glue.

10. Method according to claim 9, **characterized in that** said step c) comprises the step c1) of thermally activating said gluing sliver applied during said step a), or a1), such as to create a leather fabric.

11. Method according to one or more of claims 1 to 10, **characterized in that** said step a), or said step d), is preceded by the step d0) of screening said plurality of leather pieces (2), or said plurality of leather scrap pieces (20), depending on the thickness and/or color and/or dimensions and/or shape, and/or is preceded by the step d0') of cleaning said plurality of leather pieces (2), or said plurality of leather scrap pieces (20).

12. Leather fabric (1) comprising at least one lower support fabric (30) and a plurality of leather pieces (2) cut to size and glued on said support (30), said leather pieces of said plurality of leather pieces being positioned on said support (30) such as each piece (2), at least in part, overlaps, or is overlapped by one or more adjacent pieces (2) at a respective edge (2a), thus forming one or more overlapping areas (40).

13. Fabric according to claim 12, **characterized in that** the outer surface (1a) of said leather fabric (1), on the side opposite that of said support (30), at the area obtained by the overlapping of two edges of at least two contiguous leather pieces, is devoid of discontinuities.
